# FASCICULE DE BREVET EUROPEEN

(11) **EP 3 368 581 B1**
(45) Date de publication et mention de la délivrance du brevet: **05.06.2019**
(21) Numéro de dépôt: 16798243.8
(22) Date de dépôt: 18.10.2016
(51) Int. Cl.: C08F 214/22, C08F 8/22, C08F 8/30, C08F 8/40, C08F 216/14, C09D 127/16, C09D 127/22

(54) **COPOLYMERES FLUORES FONCTIONNALISES**
FUNKTIONALISIERTE FLUORIERTE COPOLYMERE
FUNCTIONALISED FLUORINATED COPOLYMERS

(30) Priorité: 29.10.2015 FR 1560355; 09.06.2016 FR 1655305
(43) Date de publication de la demande: 05.09.2018
(73) Titulaire: Arkema France, 92700 Colombes (FR); Centre National de la Recherche Scientifique, 75016 Paris (FR); Université de Montpellier, 34090 Montpellier (FR); Ecole Nationale Supérieure de Chimie de Montpellier, 34296 Montpellier (FR)
(72) Inventeur: LANNUZEL, Thierry, 69100 Villeurbanne (FR); DOMINGUES DOS SANTOS, Fabrice, 75003 Paris (FR); SOULESTIN, Thibaut, 69007 LYON (FR); LADMIRAL, Vincent, 34080 Montpellier (FR); AMEDURI, Bruno, 34000 Montpellier (FR)
(74) Mandataire: Albani, Dalila
(86) Numéro de dépôt international: PCT/FR2016/052687
(87) Numéro de publication internationale: WO 2017/072427

(56) Documents cités:
- EP-A1- 0 433 106
- EP-A1- 2 799 457
- US-B1- 6 281 312

## Description

### DOMAINE DE L'INVENTION

La présente invention concerne des copolymères fluorés, notamment à base de fluorure de vinylidène (VDF) et/ou de trifluoroéthylène (TrFE), fonctionnalisés notamment par des éthers vinyliques fonctionnels et/ou fonctionnalisables, des procédés de préparation de ces copolymères ainsi que leurs applications.

### ARRIERE-PLAN TECHNIQUE

Les polymères fluorés représentent une classe de composés ayant des propriétés remarquables pour un grand nombre d'applications, depuis la peinture ou les revêtements spéciaux jusqu'aux joints d'étanchéité, en passant par l'optique, la microélectronique, l'énergie telles que le photovoltaïque, les piles à combustibles et les batteries Li-Ion, et la technologie membranaire. Parmi ces polymères fluorés, le poly(fluorure de vinylidène) (PVDF) est un polymère reconnu pour sa stabilité chimique et thermique. Ce polymère est préparé par polymérisation radicalaire à partir du fluorure de vinylidène (VDF). Ce monomère fluoré copolymérise difficilement avec des monomères non-fluorés tels que les éthers vinyliques, les acrylates, les méthacrylates ou les styréniques. Afin d'améliorer certaines propriétés du PVDF, comme l'adhésion, l'anti-corrosion des revêtements, l'hydrophobie ou l'hydrophilie, tout en conservant ses propriétés notamment de résistance chimique et thermique, il est nécessaire de le fonctionnaliser par l'incorporation de monomères porteurs de fonctions chimiques. Cependant, peu de PVDF fonctionnalisés sont connus, en raison du faible nombre de monomères fonctionnalisés ou fonctionnalisables capables de copolymériser de manière satisfaisante avec le VDF. EP0433106A1, EP2799457A1 et US6281312B1 décrivent des copolymères de fluorure de vinylidène.

Un autre polymère fluoré connu, le poly(trifluoroéthylène), partage les mêmes difficultés à être fonctionnalisé, car le trifluoroéthylène (TrFE) est lui aussi difficilement copolymérisable avec des monomères fonctionnels tels que les éthers vinyliques, les acrylates, les méthacrylates et les styréniques par exemple.

Il existe donc un besoin de développer de nouveaux copolymères fluorés, notamment de copolymères à base de VDF et/ou TrFE, qui présentent des fonctionnalités les rendant aptes à des applications plus variées que celles connues, tout en gardant les propriétés spécifiques apportées par le monomère fluoré.

Le chlorotrifluoroéthylène (CTFE) copolymérise facilement avec d'autres monomères fluorés tels que le VDF ou le TrFE, mais aussi avec des monomères non-fluorés, notamment avec les éthers vinyliques. La publication de Boschet F. et Améduri B. dans Chem Rev, 2014, 114, 927-980 décrit en détails les différents copolymères à base de CTFE connus, qui sont classés en deux catégories : i) copolymères ayant une proportion faible de comonomère, leurs propriétés étant proches de celles du poly(chlorotrifluoroéthylène) en ce qui concerne le caractère thermoplastique et le fort taux de cristallinité ; et ii) copolymères contenant des comonomères donneurs d'électrons, lesdits copolymères étant obtenus par une réaction de polymérisation de type accepteur-donneur donnant majoritairement des structures alternées. Dans cette dernière catégorie, entrent les copolymères alternés de formule poly(CTFE-*alt*-éthers vinyliques), qui sont préparés par polymérisation radicalaire. A ce jour, de nombreux copolymères alternés de ce type ont été préparés, dans lesquels ledit éther vinylique (EV) est un éther d'alkyle et de vinyle de formule CH₂=CH-O-R dans laquelle R peut être par exemple choisi parmi les groupements : alkyles tels que éthyle, butyle, iso-butyle ; 4-hydroxy butyle, 2-chloroéthyle, 2-ethylhexyle, 2-hydroxy éthyle, glycidyle, 3-chloro-(2,2-diméthylpropyl). Ledit éther vinylique peut aussi être fonctionnalisé davantage avec par exemple des groupements imidazoles, carbonates ou phosphonates dans une étape ultérieure à la polymérisation. Dans les copolymères alternés précités, le ratio molaire CTFE:EV est proche de 1.

La présente invention se propose de fournir de nouveaux copolymères fluorés fonctionnalisés, notamment des copolymères de VDF et/ou TrFE fonctionnalisés par l'incorporation régulière dans la chaîne polymère de triades (X-E-X) où X est un monomère fluoré ayant au moins une double liaison qui possède un caractère électro-accepteur, c'est-à-dire appauvrie en électrons, X étant copolymérisable d'une part avec un monomère fluoré tel le VDF ou le TrFE, et d'autre part copolymérisable avec un monomère E ayant au moins une double liaison qui possède un caractère électro-donneur, c'est-à-dire enrichie en électrons, et comprenant un groupement fonctionnel ou fonctionnalisable. Ladite triade étant par exemple formée de chlorotrifluoroéthylène (monomère X) et d'éthers vinyliques (monomère E) : (CTFE-EV-CTFE).

### RESUME DE L'INVENTION

L'invention, telle que limitée par le champ des revendications, concerne en premier lieu un copolymère fluoré de formule (I) suivante :

poly[Aₐ-*co*-(X-E-X)_{b}] (I)

dans laquelle A est un monomère fluoré, X est un monomère fluoré ayant au moins une double liaison qui possède un caractère électro-accepteur, X est apte à copolymériser avec, d'une part, ledit monomère A et, d'autre part, avec un monomère E de manière alternée, E étant un monomère porteur d'un groupement fonctionnel ou fonctionnalisable ayant au moins une double liaison qui possède un caractère électro-donneur. Les indices a et b représentent les rapports molaires, en monomère A et en triade X-E-X, respectivement.

Lesdits monomères A et X copolymérisent entre eux.

Ledit monomère E ne copolymérise pas avec ledit monomère fluoré A.

De manière caractéristique, le rapport molaire X:E dans le copolymère est supérieur ou égal à 2, étant de préférence égal à 2.

De manière caractéristique, a est supérieur à 0,85, de préférence supérieur à 0,90 et avantageusement supérieur à 0,95.

De manière caractéristique, b est inférieur à 0,15, de préférence inférieur à 0,10, avantageusement inférieur à 0,05 et supérieur à 0.

Selon un mode de réalisation, ledit monomère fluoré A est le fluorure de vinylidène (VDF).

Selon un mode de réalisation, ledit monomère fluoré A est le trifluoroéthylène (TrFE).

Selon un autre mode de réalisation, ledit monomère fluoré A est un mélange de VDF et de TrFE, le copolymère selon l'invention comportant ainsi un copolymère poly[VDF-co-TrFE-co-(X-E-X)] contenant la triade (X-E-X).

Selon un mode de réalisation, ledit monomère E est porteur d'un ou plusieurs groupements fonctionnels pouvant être indépendamment, par exemple : un acide et ses dérivés tels que les acides phosphoniques et les phosphonates, et les acides carboxyliques et les esters dérivés de ceux-ci, un halogène (tel que le chlore, le brome ou l'iode), un azide, un alcyne, un alcool, un thiol, un époxy, un carbonate, un silane tel que le triéthoxy silane, un sulfonate, un silicone, une amine tertiaire, un aldéhyde, un saccharide, un polymère fluoré ou hydrocarboné.

Selon un autre mode de réalisation, ledit monomère E est un éther d'alkyle et de vinyle qui sera fonctionnalisé une fois le copolymère de formule (I) obtenu.

L'invention a également pour objet un procédé de préparation du copolymère de formule (I) comprenant une étape de copolymérisation radicalaire d'un mélange réactionnel comprenant le monomère fluoré A, le monomère X et le monomère E.

Pour le cas où ledit monomère E ne porte pas la fonction désirée, le procédé selon l'invention comporte une étape supplémentaire de fonctionnalisation dudit monomère E appelé alors monomère fonctionnalisable.

L'invention a également pour objet des copolymères à base de VDF et/ou de TrFE fonctionnels pour applications dans les membranes, les peintures, revêtements et vernis, les dispositifs électroactifs, l'énergie, l'emballage.

### BREVE DESCRIPTION DES FIGURES

La **figure 1** représente un spectre RMN ¹⁹F du copolymère poly[VDF-co-(CTFE-CEVE-CTFE)] dans le DMSO d₆ à 20 °C synthétisé grâce au procédé décrit dans l'Exemple 1.
La **figure 2** représente des spectres RMN ¹H des copolymères poly[VDF-co-(CTFE-CEVE-CTFE)] (haut, exemple 1), poly[VDF-co-(CTFE-IEVE-CTFE)] (milieu, exemple 2) et poly[VDF-*co*-(CTFE-N₃VE-CTFE)] (bas, exemple 5) dans le DMSO d₆ à 20 °C.
La **figure 3** représente des spectres FTIR des copolymères poly[VDF-co-(CTFE-IEVE-CTFE)] (ligne pointillée, exemple 2) et poly[VDF-*co*-(CTFE-N₃VE-CTFE)] (ligne pleine, exemple 5).
La **figure 4** représente des spectres RMN ¹H du copolymères poly[TrFE-co-(CTFE-iBuVE-CTFE)] dans l'acétone d₆ à 20 °C synthétisé grâce au procédé décrit dans l'exemple 1.
La **figure 5** représente un spectre RMN ¹⁹F du copolymère poly[TrFE-co-(CTFE-iBuVE-CTFE)] dans l'acétone d₆ à 20 °C synthétisé grâce au procédé décrit dans l'exemple 1.
La **figure 6** représente des thermogrammes ATG, à 10 °C/min sous air, d'un copolymère poly[VDF-co-(CTFE-iBuVE-CTFE)] (ligne pleine) et d'un copolymère poly[TrFE-co-(CTFE-CEVE-CTFE)] (ligne pointillée) synthétisés grâce au procédé décrit dans l'Exemple 1.
La **figure 7** représente un thermogramme DSC du copolymère poly[VDF-co-(CTFE-CEVE-CTFE)] (Exemple 1).
La **figure 8** représente un spectre RMN ¹⁹F du copolymère poly[VDF-co-(CTFE-OHEV-CTFE)] dans le DMF d₇ à 25°C synthétisé grâce au procédé décrit dans l'Exemple 6.
La **figure 9** représente le spectre RMN ¹H du même copolymère poly[VDF-co-(CTFE-OHEV-CTFE)] dans le DMF d₇ à 25°C.
La **figure 10** représente un spectre RMN ¹⁹F du copolymère poly[VDF-co-(CTFE-OHEV-CTFE)] fonctionnalisé par l'isocyanate d'allyle, dans l'acétone d₆ à 25°C, synthétisé grâce au procédé décrit dans l'Exemple 7.
La **figure 11** représente le spectre RMN ¹H du même copolymère poly[VDF-co-(CTFE-OHEV-CTFE)] fonctionnalisé, dans l'acétone d₆ à 25°C.
La **figure 12** représente un spectre RMN ¹⁹F du copolymère poly[VDF-co-(CTFE-OHEV-CTFE)] fonctionnalisé par l'isocyanate de 2-(méthacryloyloxy)éthyle, dans l'acétone d₆ à 25°C, synthétisé grâce au procédé décrit dans l'Exemple 7.
La **figure 13** représente le spectre RMN ¹H du même copolymère poly[VDF-co-(CTFE-OHEV-CTFE)] fonctionnalisé, dans l'acétone d₆ à 25°C.
La **figure 14** représente des spectres FTIR de copolymères poly[VDF-co-(CTFE-OHEV-CTFE)] réticulés à l'aide de différents réticulants, synthétisés grâce au procédé décrit dans l'Exemple 8,
La **figure 15** représente un spectre RMN ¹⁹F du copolymère poly[VDF-co-(CTFE- GcEV-CTFE)], dans l'acétone d₆ à 25 °C, synthétisé grâce au procédé décrit dans l'Exemple 9,
La **figure 16** représente le spectre RMN ¹H du même copolymère poly[VDF-co-(CTFE- GcEV-CTFE)] dans l'acétone d₆ à 25 °C.

### DESCRIPTION DE MODES DE REALISATION DE L'INVENTION

L'invention est maintenant décrite plus en détail et de façon non limitative dans la description qui suit.

L'invention a pour objet un copolymère fluoré de formule (I) suivante :

poly[Aₐ-*co*-(X-E-X)_{b}] (I)

dans laquelle A est un monomère fluoré, X est un monomère fluoré ayant une double liaison qui possède un caractère électro-accepteur, X est apte à copolymériser avec, d'une part, ledit monomère A et, d'autre part, avec un monomère E de manière alternée, E étant un monomère porteur d'un groupement fonctionnel ou fonctionnalisable ayant une double liaison qui possède un caractère électro-donneur. Les indices a et b représentent, respectivement, les rapports molaires, en monomère A et en triade X-E-X.

Lesdits monomères A et X copolymérisent entre eux.

Ledit monomère E ne copolymérise pas avec ledit monomère fluoré A.

Ledit monomère E dont la double liaison réactive possède un caractère électro-donneur comprend au moins un groupement fonctionnel ou fonctionnalisable pouvant être par exemple : un acide et leurs dérivés tel que les acides phosphoniques, les phosphonates d'alkyle, les acides sulfoniques, les sulfonates, les acides carboxyliques et les esters dérivés de ceux-ci, un halogène, un azide, un alcyne, un alcool, un thiol, un époxy, un carbonate, un silane tel que le triéthoxy silane, un silicone, une amine tertiaire, un aldéhyde, un saccharide, un polymère fluoré ou hydrocarboné.

De manière caractéristique, le rapport molaire X:E dans le copolymère est supérieur ou égal à 2, étant de préférence égal à 2.

De manière caractéristique, a est supérieur à 0,85, de préférence supérieur à 0,90 et avantageusement supérieur à 0,95.

De manière caractéristique, b est inférieur à 0,15, de préférence inférieur à 0,10, avantageusement inférieur à 0,05 et supérieur à 0.

Selon un mode de réalisation, lorsque le rapport X:E est supérieur à 2, le copolymère selon l'invention est un copolymère poly[A-co-X-co-(X-E-X)]. Le terme « copolymère » doit être entendu comme couvrant tout polymère comprenant au moins deux types de motifs de répétition différents. Le terme « copolymérisation » signifie toute réaction de polymérisation impliquant au moins deux types de monomères différents.

Selon un mode de réalisation, ledit monomère fluoré A est le fluorure de vinylidène (VDF).

Selon un mode de réalisation, ledit monomère fluoré A est le trifluoroéthylène (TrFE).

Selon un mode de réalisation, ledit monomère fluoré A est constitué d'un mélange de VDF et de TrFE.

Selon un autre mode de réalisation, ledit monomère fluoré A est un mélange de VDF et de TrFE, le copolymère selon l'invention comportant ainsi un copolymère poly(VDF-co-TrFE) contenant la triade (X-E-X).

Selon un mode de réalisation, ledit monomère fluoré X est choisi parmi les monomères fluorés ayant une double liaison réactive qui possède un caractère électro-accepteur tels que : le chlorofluoroéthylène (CFE), le chlorotrifluoroéthylène (CTFE), l'hexafluoropropène (HFP), le fluorure de vinyle (VF), le tétrafluoroéthylène (TFE), les tétrafluoropropènes, les hexafluorobutènes, le perfluorobutadiène, le perfluorobutène, les perfluoroéthers vinyliques tels que le perfluoro(méthyl vinyl)éther (PMVE), le perfluoro(propyl vinyl) éther (PPVE), le pentafluoropropène (PFP), le fluorure de perfluoro(4-méthyl-3,6-dioxaoct-7-ène) sulfonyle (PFSVE) ou l'acide 2-(trifluorométhyl) acrylique et ses dérivés esters.

Selon un mode de réalisation, ledit monomère E dont la double liaison réactive possède un caractère électro-donneur est un éther d'alkyle et de vinyle de formule CH₂=CH-O-R dans laquelle R peut être par exemple choisi parmi les groupements : alkyles tels que éthyle, butyle, *iso*-butyle, 2-ethylhexyle, *tert*-butyle ; alcools tels que le 4-hydroxybutyle, le 2-hydroxyéthyle ; glycérol, saccharide (hexoses et pentoses) ; halogénés tels que le 2-chloroéthyle, le chloro-(2,2-diméthylpropyl); thiols, silanes, acides, azides, alcynes, époxy, carbonates, amines, ammoniums, amidine, aldéhyde, isocyanate, urée, carboxylates, sulfonates, phosphonates, silicones, polymères et oligomères fluorés ou hydrocarbonés.

Selon un mode de réalisation, ledit monomère E est porteur d'un groupement fonctionnel (G dans le schéma ci-dessous) pouvant être par exemple : un acide et ses dérivés, tel que les acides phosphoniques, les phosphonates d'alkyle, les acides sulfoniques, les sulfonates, les acides carboxyliques et les esters dérivés de ceux-ci, un halogène, un azide, un alcyne, un alcool, un thiol, un époxy, un carbonate, un silane tel que le triéthoxy silane, un sulfonate, un silicone, une amine tertiaire, un aldéhyde, un saccharide, un polymère fluoré ou hydrocarboné.

Selon un mode de réalisation, le copolymère selon l'invention est un copolymère fonctionnel contenant du VDF ou du TrFE ou encore un mélange de VDF et de TrFE, du CTFE (monomère X) et un éther vinylique (monomère E) fonctionnel ou fonctionnalisable qui peut être porteur d'un groupement fonctionnel (« G » dans le schéma ci-dessous) pouvant être par exemple un acide et ses dérivés tel que les acides phosphoniques, les phosphonates et les acides carboxyliques, un halogène, un azide, un alcyne, un alcool, un thiol, un époxy, un carbonate, un silane tel que le triethoxy silane, un sulfonate, un silicone, une amine tertiaire, un aldéhyde, un saccharide, un polymère fluoré ou comme illustré dans le schéma suivant :

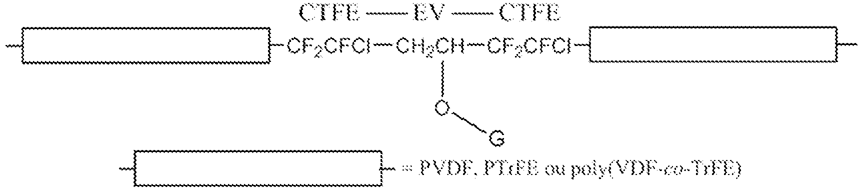

Selon un mode de réalisation, ce copolymère a la composition suivante (en moles) :
- une proportion de motifs issus des monomères fluorure de vinylidène (VDF) et/ou trifluoroéthylène (TrFE) supérieure à 85 %, de préférence supérieure à 90 %, avantageusement supérieure à 95% ;
- une proportion de motifs issus de la triade chlorotrifluoroéthylène-éther vinylique-chlorotrifluoroéthylène inférieure à 15%, de préférence inférieure à 10 %, avantageusement inférieure à 5 % ;
- une proportion de motifs issus du monomère éther vinylique inférieure à 5%, de préférence inférieure à 2%, avantageusement inférieure à 1 %, et supérieure ou égale à 0,1% ;
- un rapport molaire X:E, chlorotrifluoroéthylène:éther vinylique, supérieur ou égal à 2, de préférence égal à 2.

Selon un mode de réalisation, le copolymère selon l'invention est un copolymère contentant du VDF (monomère A), du CTFE (monomère X) et un éther vinylique (monomère E).

Selon un mode de réalisation, le copolymère selon l'invention est un copolymère contentant du TrFE (monomère A), du CTFE (monomère X) et un éther vinylique (monomère E).

Selon un mode de réalisation, le copolymère selon l'invention est un copolymère contenant un mélange de VDF et de TrFE (monomère A), du CTFE (monomère X) et un éther vinylique (monomère E).

Selon une première forme d'exécution, les éthers vinyliques sont porteurs de la fonction désirée avant la polymérisation avec les autres monomères entrant dans la composition du copolymère selon l'invention, de sorte qu'on obtient un copolymère fonctionnalisé qui n'a pas besoin de subir de modifications chimiques supplémentaires. Ce copolymère peut toutefois être modifié selon les besoins, notamment pour le réticuler.

Selon une autre forme d'exécution, ledit monomère E est un éther d'alkyle et de vinyle qui sera fonctionnalisé une fois le copolymère de formule (I) obtenu.

Dans ces deux formes d'exécution, les éthers vinyliques (EV) peuvent notamment être fonctionnalisés par :
- des fonctions acides phosphoniques pour améliorer les propriétés d'adhésion et d'anti-corrosion de revêtements ;
- des chaînes latérales de poly(ethylène glycol), PEG, pour la conduction des ions lithium dans les batteries Li-Ion ;
- d'autres fonctions chimiques permettant la réticulation du polymère. Le taux de réticulation est alors contrôlé par la quantité d'EV introduits. La réticulation du copolymère permet notamment de le rendre insoluble.

En particulier, dans la première forme d'exécution ci-dessus, le copolymère peut être réticulé soit en transformant la fonction portée par l'éther de vinyle en une fonction permettant par exemple la réticulation radicalaire ou la photoréticulation du copolymère ou sa réticulation par substitution nucléophile ou cycloaddition, soit en faisant réagir directement le copolymère avec un agent réticulant polyfonctionnel.

Ainsi, dans le cas où on utilise un éther de vinyle portant un atome de chlore (tel que le 2-chloroéthylvinyl éther ou CEVE), le copolymère obtenu à partir de ce monomère peut être modifié par iodation (réaction de Finkelstein) avec l'iodure de sodium, comme illustré dans le schéma suivant et dans l'exemple 2 :

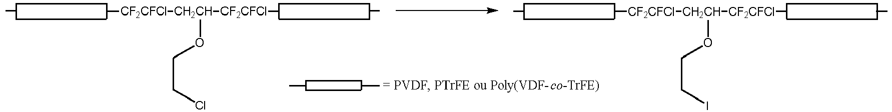

Le copolymère iodé obtenu, de formule poly[VDF-co-(CTFE-IEVE-CTFE)], peut être soumis à une réticulation radicalaire, par exemple en présence de triallyl isocyanurate (TAIC) et d'un amorceur radicalaire, ou à une réticulation par substitution nucléophile de l'iode. En variante, le copolymère iodé peut subir une réaction d'azidation, conduisant à un copolymère de formule poly[VDF-*co*-(CTFE-N₃EVE-CTFE)], comme illustré dans le schéma suivant et dans l'exemple 5 :

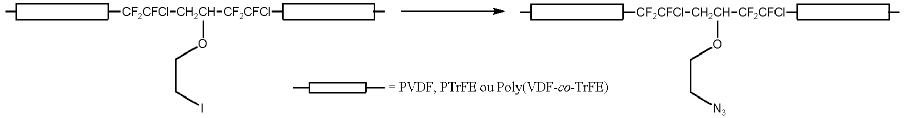

Ce copolymère modifié peut alors être réticulé par cycloaddition, en le faisant par exemple réagir avec un polyalcyne ou un polynitrile.

Selon une autre possibilité, le copolymère iodé décrit ci-dessus peut être mis à réagir avec un phosphite (comme le triéthylphosphite) par une réaction d'Arbuzov, pour former le copolymère poly[VDF-*co*-(CTFE-DEVP-CTFE)], porteur d'une fonction diéthyl vinyl phosphonate (DEVP), comme illustré dans le schéma suivant et dans l'exemple 3 :

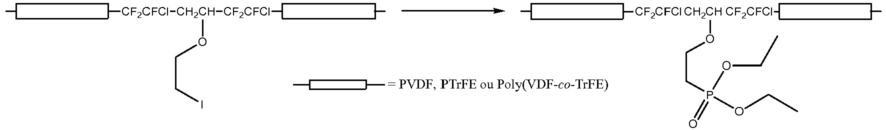

Le copolymère ainsi obtenu formera par hydrolyse un dérivé phosphoné de formule poly[VDF-*co*-(CTFE-VPA-CTFE)], porteur d'une fonction acide vinyl phosphonique (VPA), comme illustré dans le schéma suivant et dans l'exemple 4 :

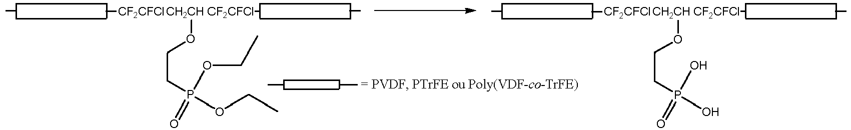

L'introduction d'EV porteurs de fonctions acides, telles qu'un acide phosphonique, améliore l'adhésion du PVDF sur différents substrats tels que les substrats métalliques.

En variante, l'éther de vinyle utilisé dans la préparation du copolymère selon l'invention peut posséder une fonction permettant le greffage d'un groupe polymérisable tel qu'un groupe allyle ou (méth)acryloyle. Il peut notamment s'agir d'une fonction hydroxy susceptible de réagir, une fois le copolymère formé, avec un isocyanate fonctionnalisé par un groupe polymérisable, comme illustré à l'Exemple 7. Après cette étape de greffage, le copolymère peut être réticulé en utilisant des amorceurs radicalaires thermiques ou des photo-amorceurs, éventuellement en présence d'un co-agent de réticulation.

En variante encore, l'éther de vinyle utilisé dans la préparation du copolymère selon l'invention peut être porteur d'une fonction, notamment hydroxy ou époxy, susceptible de former des liaisons covalentes avec un agent de réticulation polyfonctionnel, tel qu'un diacide carboxylique, un diépoxy ou un diisocyanate (dans le cas d'un éther de vinyle portant une fonction hydroxy, tel que le 2-hydroxyéthyl vinyl éther) ou encore un diol ou une diamine (dans le cas d'un éther de vinyle portant une fonction époxy, tel que le glycidyl vinyl éther). Un tel procédé de réticulation est notamment illustré à l'exemple 8.

L'invention a également pour objet un procédé de préparation du copolymère de formule (I) précité comprenant une étape de copolymérisation radicalaire d'un mélange réactionnel comprenant le monomère fluoré A, le monomère E et le monomère X, dans les rapports molaires suivants : X:E supérieur ou égal à 2, de préférence égal à 2 ; a supérieur à 0,85, de préférence supérieur à 0,90 et avantageusement supérieur à 0,95, et b inférieur à 0,15, de préférence inférieur à 0,10, avantageusement inférieur à 0,05 et supérieur à 0.

La réaction de polymérisation est effectuée selon un procédé de polymérisation radicalaire en solution, en suspension ou en émulsion, en présence d'un amorceur radicalaire, d'un solvant, éventuellement d'un agent de transfert de chaine et éventuellement d'un agent de dispersion ou d'un agent tensio-actif.

La réaction de copolymérisation est effectuée en présence d'un amorceur radicalaire. Celui-ci peut être par exemple le peroxypivalate de *tert*-butyle (ou TBPPI), le peroxypivalate de *tert*-amyle, les peroxydicarbonates tel que le peroxydicarbonate de bis(4-*tert*-butyl cyclohexyl), les persulfates de sodium, d'ammonium ou de potassium, le peroxyde de benzoyle et ses dérivés, l'hydroxyperoxyde de *tert*-butyle, le peroxyde de *tert*-butyle ou le 2,5-bis(*tert*-butylperoxy)-2,5-diméthylhexane.

Selon un mode de réalisation, la copolymérisation peut s'effectuer en présence d'un agent de dispersion. Celui-ci peut être par exemple un dérivé cellulosique hydrosoluble, tel que les alkyl celluloses ou les alkyl et hydroxyalkyl celluloses, une paraffine, les alcools polyvinyliques.

Selon un mode de réalisation, la copolymérisation peut s'effectuer en présence d'un agent de transfert de chaîne permettant de réguler la masse molaire du copolymère. La régulation de la masse molaire permet notamment de faciliter la mise en oeuvre du copolymère. Ces agents régulateurs de masses molaires peuvent être par exemple les acétates d'alkyle tels que l'acétate d'éthyle, les carbonates de bisalkyle tels que le carbonate de diéthyle, les cétones telles que la butan-2-one, les thiols, les halogénures d'alkyle, les disulfures, les alcools saturés tels que l'isopropanol et les alcanes tels que le propane.

Selon un premier mode de réalisation, le copolymère poly[Aₐ-*co*-(CTFE-EV-CTFE)_{b}] est préparé par un procédé de polymérisation radicalaire en solution, comprenant une étape de copolymérisation d'un mélange réactionnel de fluorure de vinylidène et/ou de trifluoroéthylène, de chlorotrifluoroéthylène et d'un éther vinylique fonctionnalisé ou fonctionnalisable, en présence d'un amorceur radicalaire et d'un solvant.

Selon un mode de réalisation :
- la proportion molaire de VDF et/ou de TrFE dans le mélange réactionnel est supérieure à 85 %, de préférence supérieure à 90 %, avantageusement supérieure à 95% ;
- la proportion d'EV est inférieure à 5%, de préférence inférieure à 2%, avantageusement inférieure à 1 %, et supérieure ou égale à 0,1% ;
- le rapport molaire X:E, chlorotrifluoroéthylène:éther vinylique est supérieur ou égal à 2, de préférence égal à 2 ;
les proportions molaires étant rapportées à la somme de moles de VDF, de TrFE, de CTFE et d'EV.

Selon un mode de réalisation, le mélange réactionnel consiste essentiellement en, et de préférence consiste en, un mélange de VDF et/ou de TrFE, de CTFE et d'EV, d'amorceur radicalaire, et de solvant.

La réaction est effectuée dans un solvant, qui est par exemple choisi parmi le 1,1,1,3,3-pentafluorobutane, l'acétonitrile, la méthyléthylcétone, le diméthyl carbonate, le 2,2,2-trifluoroéthanol, l'hexafluoroisopropanol, le *tert*-butanol l'acétate de méthyle, l'acétate d'éthyle, la cyclohexanone, l'eau et les mélanges de ceux-ci.

Selon un mode de réalisation, le mélange réactionnel est chauffé jusqu'à une température de démarrage de réaction comprise entre 30 et 100 °C et de préférence entre 40 et 80 °C. La pression initiale à l'intérieur de l'autoclave varie en fonction du solvant, de la température de la réaction et de la quantité de monomères. Elle est généralement comprise entre 0 à 80 bar. Le choix de la température optimale dépend de l'amorceur qui est utilisé. Généralement, la réaction est mise en oeuvre pendant au moins 6 heures, à une température à laquelle le temps de demi-vie de l'amorceur est compris entre 1 et 10 heures.

Selon un mode de réalisation préféré, la proportion molaire de motifs VDF et/ou TrFE (monomère A) dans le copolymère est supérieure à 85 %, de préférence supérieure à 90 %, avantageusement supérieure à 95%.

Selon un mode de réalisation préféré, la proportion molaire de motifs issus de la triade CTFE-EV-CTFE dans le copolymère est inférieure à 15%, de préférence inférieure à 10 %, avantageusement inférieure à 5 %.

Selon un mode de réalisation, la proportion molaire de motifs issus du monomère EV est inférieure à 5%, de préférence inférieure à 2%, avantageusement inférieure à 1 %, et supérieure ou égale à 0,1%.

Selon un mode de réalisation préféré, le rapport molaire CTFE:EV est supérieur ou égal à 2, de préférence égal à 2.

La masse molaire du copolymère poly[Aₐ-*co*-(CTFE-EV-CTFE)_{b}] obtenu par polymérisation en solution est de préférence de 5.000 à 150.000 g/mol, plus préférentiellement de 10.000 à 100.000 g/mol.

Selon un autre mode de réalisation, le copolymère poly[Aₐ-*co*-(CTFE-EV-CTFE)_{b}] est préparé par un procédé de polymérisation radicalaire en suspension, comprenant une étape de copolymérisation d'un mélange réactionnel de VDF et/ou de TrFE, de CTFE et d'EV en présence d'eau, d'un amorceur radicalaire, éventuellement d'un agent de dispersion et, éventuellement, d'un agent de transfert de chaîne.

Le procédé en suspension permet d'éviter l'utilisation de solvants toxiques et de tensio-actifs fluorés (type PFOA ou PFOS bio-accumulables, toxiques et persistants) lors de la synthèse et de la purification du copolymère.

Dans le procédé en suspension, le VDF et/ou le TrFE, le CTFE et l'EV sont chargés dans un réacteur agité rempli avec de l'eau déionisée, éventuellement un agent de dispersion et éventuellement un agent de transfert de chaîne.

Le réacteur est ensuite porté à la température d'amorçage souhaitée, cette température étant maintenue pendant la polymérisation à une valeur généralement comprise entre 40 et 60°C. L'amorceur est ensuite injecté dans le réacteur pour démarrer la polymérisation. La consommation des monomères conduit à une diminution de pression qui est compensée par une alimentation en continue d'eau. La pression est ainsi maintenue dans une gamme allant de préférence de 80 à 110 bars. Le réacteur est ensuite refroidi et dégazé. Le produit est déchargé et récupéré sous la forme d'une suspension. Cette suspension est filtrée et la poudre humide est lavée puis séchée.

La masse molaire du copolymère obtenu par polymérisation en suspension est de préférence de 100.000 à 500.000 g/mol, plus préférentiellement de 150.000 à 400.000 g/mol.

Selon encore un autre mode de réalisation, le copolymère utilisé selon l'invention est préparé suivant un procédé de polymérisation radicalaire en émulsion.

Pour ce faire, on prépare avantageusement une dispersion aqueuse de l'amorceur stabilisé par le tensioactif utilisé pour conduire la polymérisation. Pour réaliser cette dispersion, on mélange l'eau, l'amorceur et une faible fraction de la totalité du tensioactif dans un disperseur. C'est cette dispersion qui est ajoutée au début puis éventuellement au cours de la polymérisation. Après chargement du réacteur de polymérisation avec de l'eau, du tensioactif, éventuellement de la paraffine et éventuellement le monomère E, on pressurise le réacteur, après avoir éliminé l'oxygène, en y ajoutant le monomère A seul ou en mélange avec les comonomères tels que le monomère X et le monomère E et on porte à la température choisie. Avantageusement, l'émulsion aqueuse est polymérisée à une température de 50 à 130°C. De préférence, la polymérisation est réalisée à une pression absolue de 40 à 120 bars. Le démarrage de la réaction est obtenu par addition de la dispersion d'amorceur. Pendant la polymérisation, on ajoute éventuellement le monomère A seul ou en mélange avec les comonomères tels que le monomère X et le monomère E pour maintenir la pression ou pour obtenir une variation de pression contrôlée. On procède éventuellement à l'addition de l'amorceur par incréments ou en continu. Un agent de transfert de chaîne (CTA) peut éventuellement être ajouté au début ou au cours de la polymérisation. Dans ce dernier cas, il peut être introduit par incréments ou en continu. Après introduction de la quantité prévue de monomère A ou du mélange de comonomères, le réacteur est dégazé et refroidi et le latex est vidangé.

La récupération du copolymère à partir du latex constitue l'opération de finition. Celle-ci consiste essentiellement à coaguler le latex puis à sécher le coagulat pour obtenir une poudre sèche. La finition peut également inclure une étape de lavage. Ce lavage peut, par exemple, être réalisé par introduction du latex, éventuellement dilué, dans un coagulateur où il est soumis à un cisaillement en présence d'air. Sous l'effet cumulé de ces deux actions, le latex se transforme en crème aérée d'une densité inférieure à celle de l'eau. Cette crème est éventuellement lavée à contre-courant avec de l'eau désionisée, par exemple selon le procédé décrit dans les brevets US 4,128,517 et EP 0 460 284. Le séchage peut être réalisé selon tout moyen industriel connu de l'homme de l'art. En particulier, on peut avantageusement sécher le latex coagulé ou la crème dans un atomiseur. Ainsi, à la sortie de la colonne de lavage ou immédiatement après la coagulation, la crème aérée est envoyée dans un récipient de stockage avant d'être dirigée par pompage dans un atomiseur qui la transforme en une poudre sèche. Cette étape de séchage dans un atomiseur peut également être appliquée au latex initial, éventuellement dilué, au latex coagulé par exemple par cisaillement mécanique avec ou sans dilution préalable ou encore à la crème aérée.

Un autre procédé de polymérisation en émulsion utilisable pour préparer le copolymère est celui décrit dans le document US-7,122,608.

Le copolymère poly[Aₐ-*co*-(CTFE-EV-CTFE)_{b}] préparé selon l'invention présente des chaînes avec une distribution aléatoire de la triade CTFE-EV-CTFE pouvant être contrôlée par le procédé de copolymérisation. Le CTFE copolymérise de manière aléatoire avec le VDF et le TrFE alors que l'EV ne copolymérise qu'avec le CTFE et ce de manière alternée. Les propriétés principales du PVDF, du PTrFE et du poly(VDF-co-TrFE) telles que la résistance chimique et thermique sont conservées.

Les copolymères obtenus selon l'invention sont utiles notamment pour la fabrication de membranes, peintures, revêtements et vernis tel que des revêtements anti-corrosion, dispositifs électroactifs, dispositifs pour énergie tels que les panneaux photovoltaïques, les piles à combustible ou les batteries Li-Ion.

### EXEMPLES

Les exemples suivants illustrent l'invention sans la limiter.

### Techniques et appareils de mesure

*Résonnance Magnétique Nucléaire (RMN).* Les spectres RMN sont obtenus sur un appareil Bruker AC 400, l'acétone ou le DMF deutériés sont utilisés comme solvants. Les constantes de couplage et les déplacements chimiques sont respectivement donnés en hertz (Hz) and en parties par million (ppm). Les paramètres d'acquisition pour la RMN ¹H [ou ¹⁹F] sont les suivants : angle de rotation 90° [30°], temps d'acquisition 4,5 s [0,7 s], séquence d'impulsion 2 s, nombre de scans 8 [128] et une durée de d'impulsion de 5 µs pour la RMN ¹⁹F.

*Chromatographie d'Exclusion Stérique (CES).* Les analyses CES ont été réalisées sur un appareil Polymer Laboratories PL-GPC 50 Plus équipé de deux colonnes PL gel-mixed-C de 5 µm (gamme de masse molaire de 200 à 2.10⁶ g/mol) thermostatées à 35 °C. Un détecteur de variation d'indice de réfraction est utilisé. Le tétrahydrofurane (THF) est utilisé en tant qu'éluant (1,0 mL/min). L'étalonnage de l'appareil est réalisé avec des étalons de polystyrène (PS) et le toluène comme référence pour le débit.

*Analyses Thermogravimétriques (ATG).* Les analyses ATG sont réalisées sur des échantillons de 10-15 mg sur un appareil TGA Q 50 de TA Instruments dans des coupelles en aluminium. La montée en température est réalisée à 10 °C/min entre 25 et 590 °C, sous air.

*Calorimétrie Différentielles à Balayage (DSC).* Les mesures DSC sont obtenues sur des échantillons de 10-15 mg sur un appareil Netzsch DSC 200 F3 en utilisant le cycle d'analyse suivant : refroidissement de la température ambiante à -50 °C à 20 °C/min, isotherme à -50 °C pendant 5 min, première montée de -50 à 200 °C à 10 °C/min, refroidissement de 200 à -50 °C à 10 °C/min, isotherme à -50 °C pendant 3 min, deuxième montée en température de -50 à 200 °C à 10 °C/min et dernier refroidissement de 200 °C à la température ambiante. L'étalonnage a été réalisé avec des métaux nobles et vérifié avec un échantillon d'indium avant l'analyse.

*Spectroscopie Infrarouge (FTIR).* Les spectres FTIR ont été enregistrés sur un spectromètre Perkin-Elmer Spectrum 1000, équipé d'un module ATR, à 25 °C, avec une précision de ± 2 cm⁻¹.

### Exemple 1 : Copolymérisation radicalaire du VDF avec le CTFE et le CEVE.

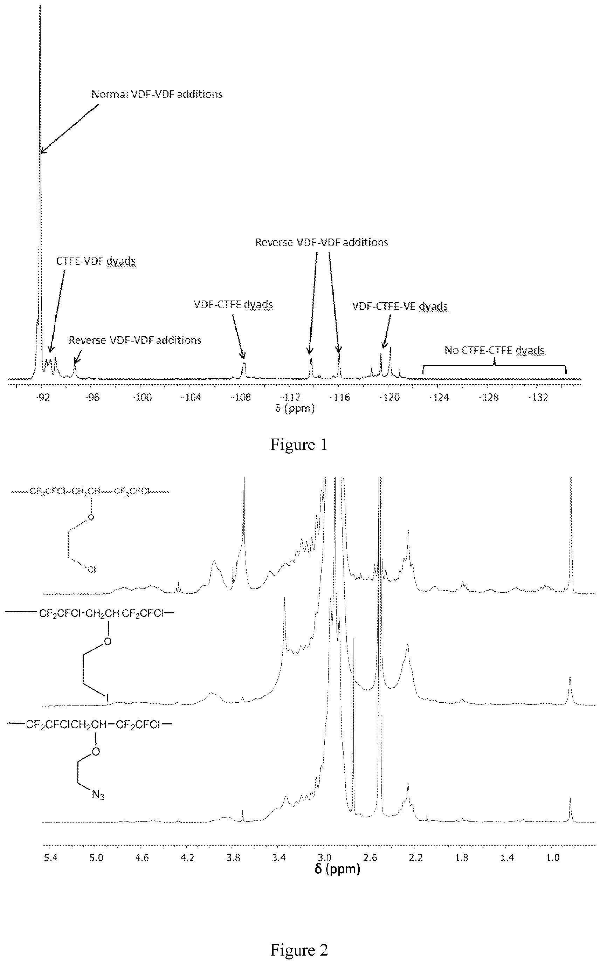

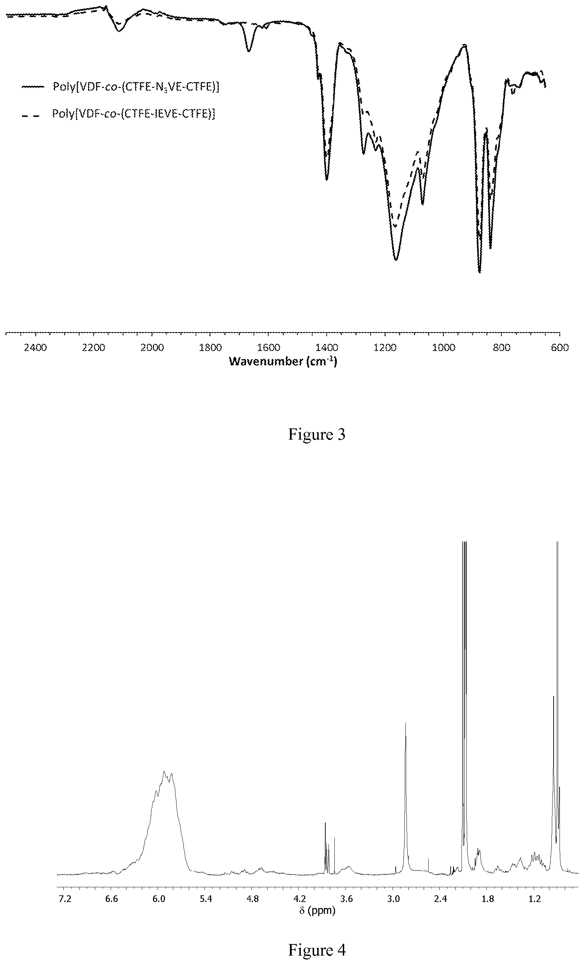

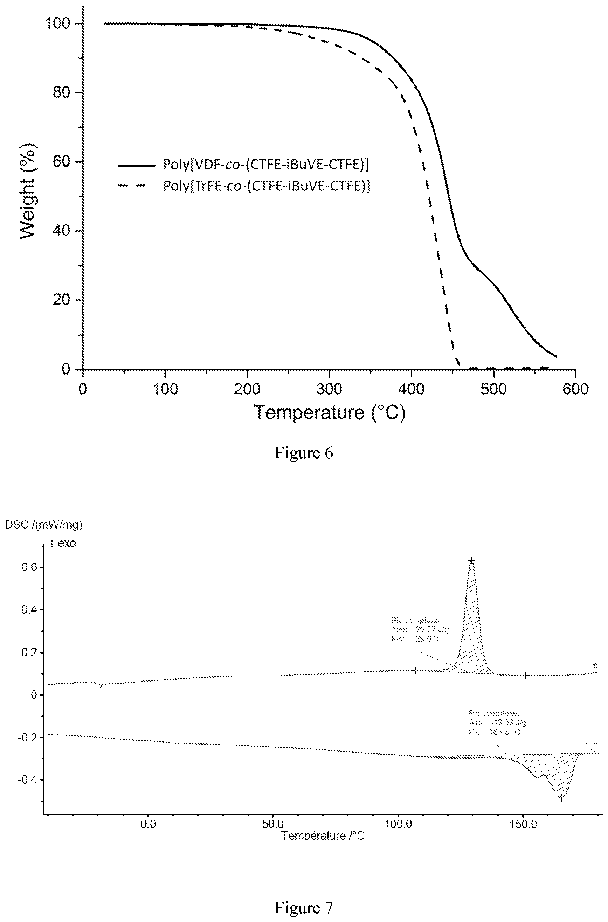

Un autoclave de 100 mL en Hastelloy est équipé avec des vannes d'entrée et de sortie, un disque de rupture, un manomètre et un capteur de pression relié à un ordinateur pour enregistrer l'évolution de la pression en fonction du temps. L'autoclave est pressurisé avec 30 bars d'azote afin de vérifier l'absence de fuites. Il subit ensuite trois cycles de vide-azote afin d'éliminer toute trace d'oxygène. Après l'inertage du réacteur, 60 mL d'une solution dégazée contenant du di(*tert*-butylcyclohexyl) peroxydicarbonate (1,02 g, 2,56 mmol) et du 2-chloroéthylvinyléther (CEVE, 1,90 g, 12,8 mmol) dans le dimethylcarbonate (DMC) est introduite dans le réacteur. Le réacteur est ensuite refroidi à -80 °C afin d'introduire les monomères gazeux. Le chlorotrifluoroethylene (CTFE, 4,5 g, 39 mmol) puis le fluorure de vinylidène (VDF, 20,0 g, 313 mmol) sont transférés dans le réacteur par une double pesée. Après avoir chargé tous les réactifs, l'autoclave est réchauffé à température ambiante puis chauffé à 48 °C. La réaction dure 15 heures et une chute de pression de 16 bar est observée par rapport aux 23 bar au début de la réaction. Après la réaction, le réacteur est placé dans un bain de glace et dégazé. Ce brut réactionnel, visqueux et incolore, est transféré dans un bécher et diluée dans 200 mL d'acétone. Cette solution est précipitée dans 4 L de pentane froid. Le produit obtenu, un solide blanc, est séché à 60 °C sous vide pendant 14 h. Le polymère obtenu (rendement = 82 %) est caractérisé par spectroscopie RMN ¹H (Figure 3) et ¹⁹F (Figure 2), CES (Mₙ = 42 kg/mol), ATG (Figure 6) et DSC (Figure 7). La composition molaire initiale VDF/CTFE/CEVE en monomères est de 86/10/4 et la composition molaire finale VDF/CTFE/CEVE du copolymère est de 79/14/7.

### Exemple 2: Réaction de Finkelstein, préparation d'un copolymère poly[VDF-co-(CTFE-IEVE-CTFE)]

20,0 g du copolymère poly[VDF-*co*-(CTFE-CEVE-CTFE)] sont dissous dans l'acétone sec et introduits dans un autoclave de 100 ml. Après ajout de 9,0 g (60 mmol) d'iodure de sodium, le réacteur est fermé et mis sous agitation à 60 °C pendant 7 jours. À la fin de la réaction, l'autoclave est refroidi à température ambiante. Après filtration sur entonnoir fritté, la solution est précipitée dans l'eau froide puis le polymère est dissout dans de l'acétone et précipité une deuxième fois dans du méthanol froid. Le solide de couleur jaune obtenu est filtré puis séché sous vide (10 mbar) à 60 °C pendant 14 h (rendement 75 %).

### Exemple 3: Réaction de Michaelis-Arbuzov, préparation d'un copolymère poly[VDF-co-(CTFE-DEVP-CTFE)]

Dans un ballon de 100 mL surmonté d'un réfrigérant droit à eau, 10,0 g du copolymère poly[VDF-co-(CTFE-IEVE-CTFE)] sont dissous dans 50 mL de triéthyl phosphite. La réaction est chauffée à 140 °C pendant 8 heures. La solution brute est précipitée deux fois dans de l'éther diéthylique, puis le solide est filtré puis séché à 120 °C à 0,05 mbar pendant 24 heures. Finalement une dernière précipitation dans l'éther diéthylique permet d'obtenir une poudre marron (rendement 63 %) qui est séchée à 80 °C sous vide pendant 14 heures.

### Exemple 4: Hydrolyse, préparation d'un copolymère poly[VDF-co-(CTFE-VPA-CTFE)]

Un ballon tricol de 250 mL, équipé d'une ampoule à brome de 50 mL, d'un réfrigérant droit et d'un thermomètre ; est séché et purgé avec de l'azote pendant 15 minutes. Ce ballon contient 8,0 g du copolymère synthétisé dans l'exemple 3. Une légère surpression d'azote est appliquée dans le montage pour éviter toute introduction d'humidité dans le système. 60 mL de tétrahydrofurane anhydre est ajouté par l'ampoule à brome. Le milieu réactionnel est placé dans un bain de glace et refroidi à 4 °C. 675 mg de bromotriméthyl silane (TMSBr, 4,41 mmol) sont introduits goutte à goutte pendant 15 minutes. Après 30 minutes, le milieu réactionnel est ramené progressivement à température ambiante. La réaction se déroule pendant 15 heures puis 100 mL de méthanol sont introduits par l'ampoule à brome. La solution est fortement agitée pendant 2 heures. Une fois la réaction terminée, les solvants sont évaporés par un évaporateur rotatif sous vide à 50 °C. Le solide obtenu est dissous dans l'acétone puis précipité deux fois dans 2 litres de méthanol froid. La poudre blanche obtenue (rendement 42 %) est séchée à 60 °C sous vide pendant 14 heures puis caractérisée par spectroscopie RMN ¹H, ¹⁹F et ³¹P, ATG et DSC.

### Exemple 5 : Réaction d'azidation, préparation d'un copolymère poly[VDF-co-(CTFE-N₃EVE-CTFE)]

5,00 g du copolymère poly[VDF-*co*-(CTFE-IEVE-CTFE)] sont dissous dans 30 mL de DMF. Puis la solution résultante et 1,00 g d'azoture de sodium (15,4 mmol) sont placés dans un ballon de 50 mL et agités. La réaction est chauffée à 50 °C pendant 24 heures. Le produit est ensuite filtré sur papier filtre. Le produit est purifié par précipitation dans le méthanol froid et séchage à 40 °C sous vide pendant 14 heures (Figure 3, rendement de 87 %). On obtient une poudre fine jaune pâle.

La **Figure 1** représente un spectre RMN ¹⁹F du copolymère poly[VDF-*co*-(CTFE-CEVE-CTFE)] dans le DMSO d₆ à 20 °C synthétisés grâce au procédé décrit dans l'Exemple 1.
Le spectre RMN ¹⁹F permet d'observer les différents types d'atomes de fluor présents dans le copolymère. Le spectre est très similaire à celui d'un homopolymère du PVDF avec les additions normales (tête-queue) à -92 ppm et les additions inverses (tête-tête) à -114 et -116 ppm. Les massifs à -108 et -120 ppm sont attribués aux atomes de fluor du CTFE.
Le spectre RMN ¹⁹F permet de déterminer le rapport molaire VDF/CTFE nécessaire pour le calcul de la composition molaire du copolymère.
On n'observe pas de signaux caractéristiques d'enchainements CTFE-CTFE à -127 ppm, ni de signaux caractéristiques d'une longue séquence CTFE-EV-CTFE alternée. L'absence de ces signaux confirme l'introduction le long de la chaine polymère d'une seule triade CTFE-EV-CTFE.

La **Figure 2** représente les spectres RMN ¹H des copolymères poly[VDF-(CTFE-CEVE-CTFE)] (haut, exemple 1), poly[VDF-*co*-(CTFE-IEVE-CTFE)] (milieu, exemple 2) et poly[VDF-*co*-(CTFE-N₃VE-CTFE)] (bas, exemple 5) dans le DMSO d₆ à 20 °C.
Les spectres RMN ¹H permettent d'observer les différents types de protons présents dans les copolymères. Le massif entre 2,6 et 3,2 ppm correspond aux protons des CH₂ des unités VDF dans les enchainements tête-queue. Le massif entre 2,3 et 2,6 ppm correspond aux protons des CH₂ des unités VDF dans les enchainements queue-queue. Le massif entre 3,2 et 3,6 ppm correspond aux protons CH₂-CH(OR)- des unités EV le long du squelette du copolymère. Le massif entre 4,3 et 4,9 ppm correspond aux protons CH₂-CH(OR)- des unités EV le long du squelette du copolymère. Le massif entre 3,8 et 4,1 ppm correspond aux protons OCH₂CH₂-X adjacents à l'oxygène de la chaine latérale de l'éther vinylique.
Le massif correspondant aux protons OCH₂CH₂-X se déplace entre 3,1 et 3,8 ppm en fonction du copolymère. Il est caractéristique des différentes étapes de fonctionnalisation. Entre chaque étape, on observe une disparition totale du signal précédent confirmant l'efficacité de la modification chimique.
Le spectre RMN ¹H permet de déterminer le rapport molaire VDF/EV nécessaire pour le calcul de la composition molaire du copolymère.
Les spectres RMN ¹H permettent de prouver la validité des étapes de fonctionnalisation/modification chimique.

La **Figure 3** représente des spectres FTIR des copolymères poly[VDF-*co*-(CTFE-IEVE-CTFE)] (ligne pointillée, exemple 2) et poly[VDF-*co*-(CTFE-N₃VE-CTFE)] (ligne pleine, exemple 5)
Cette figure confirme la modification chimique des copolymères et notamment l'étape d'azidation peu visible en RMN ¹H. La présence d'une fonction azide (N₃) est confirmée par la bande de vibration de valence observée autour de 2200 cm⁻¹.

La **Figure 4** représente le spectre RMN ¹H du copolymère poly[TrFE-*co*-(CTFE-iBuVE-CTFE)] dans l'acétone d₆ à 20 °C synthétisé grâce au procédé décrit dans l'exemple 1.
Le spectre RMN ¹H permet d'observer les différents types de protons présents dans le copolymère. Le massif entre 5,5 et 6,5 ppm correspond aux protons des unités CFH des motifs trifluoroéthylène. Le massif à 1,1 ppm correspond aux 6 protons des CH₃ du motif iso-butyle de l'éther vinylique.
Le spectre RMN ¹H prouve l'incorporation de l'éther vinylique dans le polymère alors que le TrFE et l'iBuVE ne copolymérisent pas.

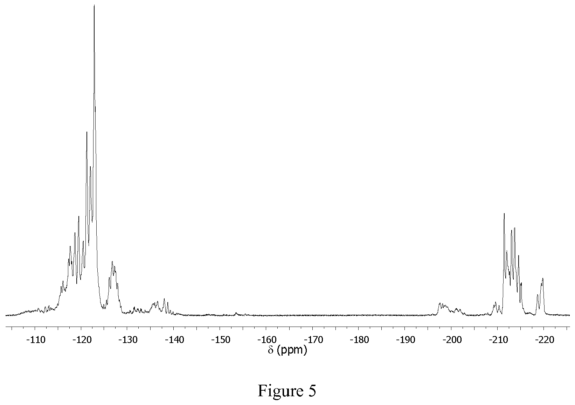

La **Figure 5** représente un spectre RMN ¹⁹F du copolymère poly[TrFE-*co*-(CTFE-iBuVE-CTFE)] dans l'acétone d₆ à 20 °C synthétisé grâce au procédé décrit dans l'exemple 1.
Le spectre RMN ¹⁹F permet d'observer les différents types d'atomes de fluor présents dans le copolymère. Les signaux observés en -195 et -225 ppm correspondent aux atomes de fluor des unités CFH du trifluoroéthylène. Les massifs complexes entre - 105 et -145 ppm correspondent à ceux du trifluoroéthylène, CF₂, et du CTFE, CF₂ et CFCl.
Le spectre RMN ¹⁹F prouve l'introduction de CTFE le long de la chaine polymère.

La **Figure 6** représente les thermogrammes ATG, à 10 °C/min sous air, d'un copolymère poly[VDF-*co*-(CTFE-iBuVE-CTFE)] (ligne pleine) et d'un copolymère poly[TrFE-*co*-(CTFE-CEVE-CTFE)] (ligne pointillée) synthétisés grâce au procédé décrit dans l'Exemple 1.
L'introduction de la triade CTFE-EV-CTFE ne diminue pas la très bonne stabilité thermique des polymères fluorés. Le polymère avec un squelette de PVDF reste stable sous air jusqu'à 300 °C.

La **Figure 7** représente un thermogramme DSC du copolymère poly[VDF-*co*-(CTFE-CEVE-CTFE)] (Exemple 1).
L'introduction de la triade CTFE-EV-CTFE diminue de 5-10 °C la température de fusion du PVDF ainsi que son taux de cristallinité. Le copolymère reste cependant fortement cristallin et la température de fusion suffisamment élevée pour garantir les propriétés du copolymère final.

### Exemple 6 : Préparation d'un copolymère poly[VDF-co-(CTFE-OHVE-CTFE)]

Un autoclave de 100 mL en Hastelloy est équipé avec des vannes d'entrée et de sortie, un disque de rupture, un manomètre et un capteur de pression relié à un ordinateur pour enregistrer l'évolution de la pression en fonction du temps. L'autoclave est pressurisé avec 30 bars d'azote afin de vérifier l'absence de fuites. Il subit ensuite trois cycles de vide-azote afin d'éliminer toute trace d'oxygène. Après l'inertage du réacteur, 60 mL d'une solution dégazée contenant du di(*tert*-butylcyclohexyl) peroxydicarbonate (1,02 g, 2,56 mmol) et du 2-hydroxyéthyl vinyl éther (OHEV, 2,29 g, 26,0 mmol) dans le diméthylcarbonate (DMC) est introduite dans le réacteur. Le réacteur est ensuite refroidi à -80 °C afin d'introduire les monomères gazeux. Le chlorotrifluoroéthylène (CTFE, 8,0 g, 69 mmol) puis le fluorure de vinylidène (VDF, 30,5 g, 477 mmol) sont transférés dans le réacteur par une double pesée. Après avoir chargé tous les réactifs, l'autoclave est réchauffé à température ambiante puis chauffé à 48 °C. La réaction dure 15 heures et une chute de pression de 16 bars est observée par rapport aux 23 bar au début de la réaction à 48 °C. Après la réaction, le réacteur est placé dans un bain de glace et dégazé. Le brut réactionnel, visqueux et incolore, est transféré dans un bécher et dilué dans 200 mL d'acétone. Cette solution est précipitée dans 4 L de pentane froid. Le produit obtenu, un solide blanc, est séché à 60 °C sous vide pendant 14 h.

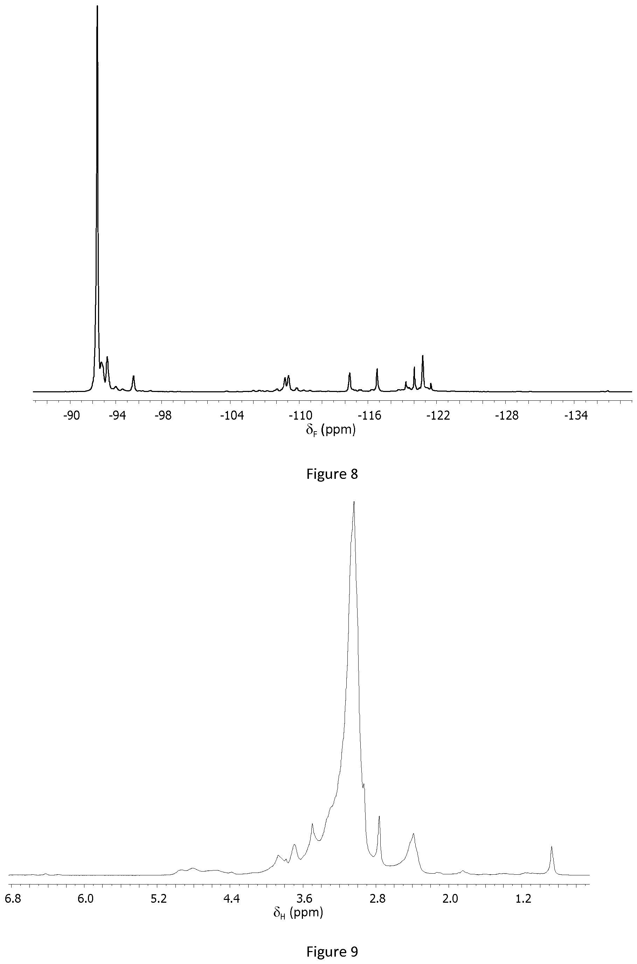

Le copolymère (rendement = 81 %) est caractérisé par spectroscopie RMN ¹H (Figure 9) et ¹⁹F (Figure 8). Le signal large centré vers 5 ppm et ceux à 3,6 et 3,9 ppm sur le spectre RMN ¹H confirment la présence d'OHEV (hydroxyéthyl vinyl éther) dans le copolymère. Le spectre RMN ¹⁹F ne montre pas de signaux caractéristiques d'enchainements CTFE-CTFE (- 130 ppm) ni de signaux caractéristiques d'une longue séquence CTFE-EV CTFE alternée (massifs larges et complexes entre -110 ppm et - 126 ppm). L'absence de ces signaux confirme l'introduction le long de la chaine d'une seule triade CTFE-EV-CTFE. La composition molaire VDF/CTFE/OHEV du copolymère, obtenue en combinant les spectres RMN ¹H et ¹⁹F, est de 80/14/6.

### Exemple 7 : Préparation de copolymères poly[VDF-co-(CTFE-OHVE-CTFE)] fonctionnalisés

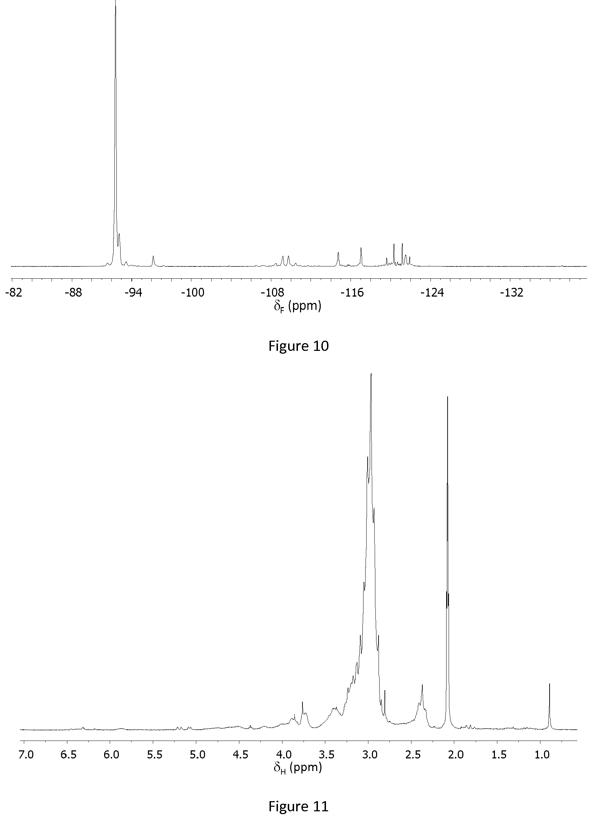

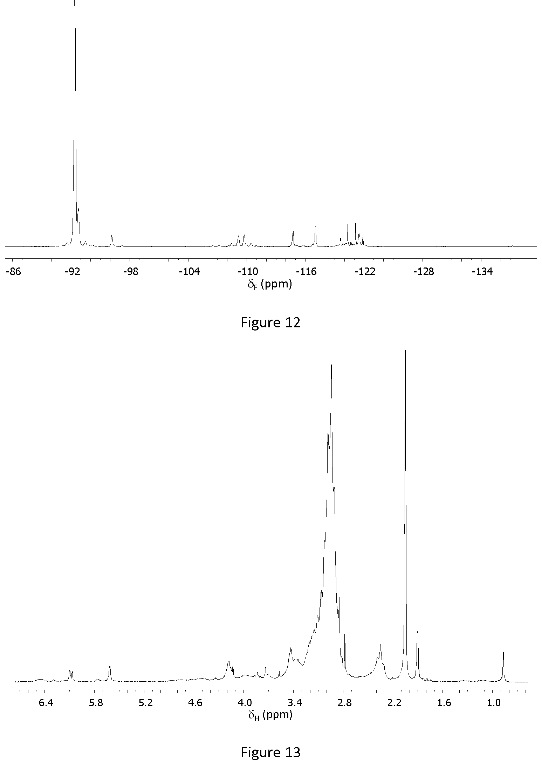

Une solution mère contenant 10,0 g de terpolymère obtenu selon l'Exemple 6 dans 50,0 g de butan-2-one (MEK) est préparée à 50 °C. 5,0 g de la solution mère sont transférés dans un pilulier auquel on ajoute 0,909 mmol d'allyl isocyanate (AlI) ou de 2-(méthacryloyloxy)éthyl isocyanate (MAI). Après 24 h sous forte agitation, la solution est précipitée dans 1 L d'eau froide fortement agitée. Le copolymère, un solide blanc, est récupéré par filtration puis séché à 50 °C sous vide pendant 24 h. Le produit final est caractérisé par RMN ¹⁹F (Figures 10 et 12) et ¹H (Figures 11 et 13). Comme il ressort des spectres RMN ¹⁹F, qui sont identiques à celui de la Figure 8, le greffage des motifs isocyanates fonctionnels ne modifie pas la structure de la chaîne polymère. En RMN ¹H, on observe pour le copolymère fonctionnalisé AlI (Figure 11) des signaux à 5,6 et 6,1 ppm caractéristiques des protons de la double liaison de la fonction allyle. Les signaux attribués au -O-C**H**₂-C**H**₂-O de la chaine pendante de l'EV, initialement à 3,6 et 3,9 ppm, sont déplacés à 3,4 et 4,2 ppm, ce qui confirme la formation d'une liaison uréthane.

Ce spectre RMN ¹H démontre ainsi que l'AlI est bien greffé sur les groupements hydroxy pendants du copolymère fonctionnalisé. De même, le spectre RMN ¹H obtenu pour le copolymère fonctionnalisé MAI (Figure 13) confirme le greffage des groupes MAI (les signaux de la double liaison sont présents autour de 5,2 ppm).

Les copolymères obtenus sont porteurs de doubles liaisons pendantes qui leur permettent d'être ensuite facilement réticulés par voie radicalaire, en présence d'un co-agent de réticulation et d'un amorceur radicalaire pouvant être un amorceur thermique ou un photo-amorceur. Les paramètres de réticulation (température, intensité de lumière, longueur d'onde), seront choisis par l'homme de l'art en fonction de l'amorceur utilisé.

### Exemple 8 : Préparation de copolymères poly[VDF-co-(CTFE-OHVE-CTFE)] réticulés

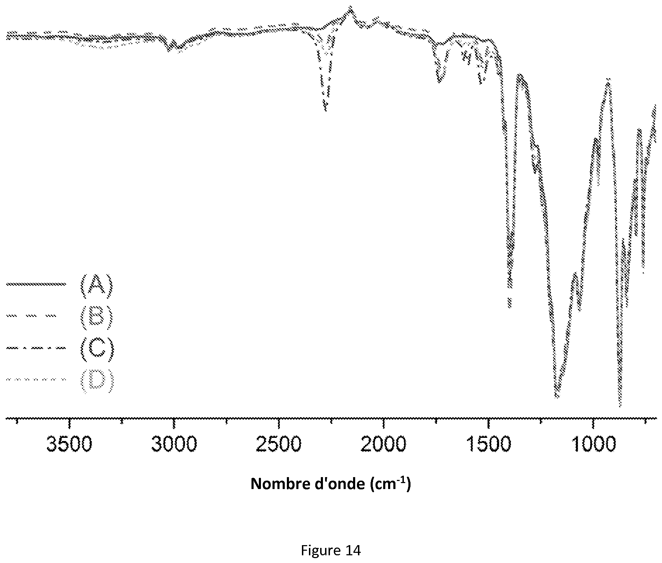

Une solution mère contenant 10,0 g de terpolymère dans 50,0 g de butan-2-one (MEK) est préparée à 50 °C. 5,0 g de solution sont transférés dans un pilulier auquel on ajoute 0,909 mmol d'hexaméthyl diisocyanate (HMDI). Après homogénéisation, un film est préparé à partir de ce mélange sur une plaque en verre. Après 2 h à 25 °C, le séchage est poursuivi dans une étuve ventilée à pression atmosphérique à 100 °C. La procédure est répétée avec le toluène diisocyanate (TDI) et l'isophorone diisocyanate (IDI). Un film sans diisocyanate est aussi préparé en tant que référence. Tous les films ont une épaisseur d'environ 23 µm, sont homogènes, légèrement opaques et montrent de très bonnes propriétés d'adhésion sur verre. Ils sont caractérisés par FTIR dont le spectre (Figure 14) montre à 1750 cm⁻¹ la bande caractéristique de liaisons uréthanes.

Ces polymères réticulés ont été testés pour évaluer leur solubilité dans le DMF à 25 °C pendant 24 h, qui a été comparée à celle d'un film du copolymère fonctionnalisé: tous les copolymères préparés selon le protocole mentionné ci-dessus étaient insolubles.

### Exemple 9 : Préparation de copolymères poly[VDF-co-(CTFE-GcVE-CTFE)]

De manière similaire à l'exemple 6, un autoclave de 100 mL en Hastelloy est équipé avec des vannes d'entrée et de sortie, un disque de rupture, un manomètre et un capteur de pression relié à un ordinateur pour enregistrer l'évolution de la pression en fonction du temps. L'autoclave est pressurisé avec 30 bars d'azote afin de vérifier l'absence de fuites. Il subit ensuite trois cycles de vide-azote afin d'éliminer toute trace d'oxygène. Après l'inertage du réacteur, 60 mL d'une solution dégazée contenant du di(*tert-*butylcyclohexyl) peroxydicarbonate (1,02 g, 2,56 mmol) et du glycidyl vinyl éther (GcEV, 2,18 g, 21,8 mmol) dans le dimethylcarbonate (DMC) est introduite dans le réacteur. Le réacteur est ensuite refroidi à -80 °C afin d'introduire les monomères gazeux. Le chlorotrifluoroéthylèene (CTFE, 9,0 g, 78 mmol) puis le fluorure de vinylidène (VDF, 28,0 g, 438 mmol) sont transférés dans le réacteur par une double pesée. Après avoir chargé tous les réactifs, l'autoclave est réchauffé à température ambiante puis chauffé à 48 °C. La réaction dure 15 heures et une chute de pression de 16 bar est observée par rapport aux 23 bar au début de la réaction à 48 °C. Après la réaction, le réacteur est placé dans un bain de glace et dégazé. Ce brut réactionnel, visqueux et incolore, est transféré dans un bécher et diluée dans 200 mL d'acétone. Cette solution est précipitée dans 4 L de pentane froid. Le solide blanc obtenu est séché à 60 °C sous vide pendant 14 h.

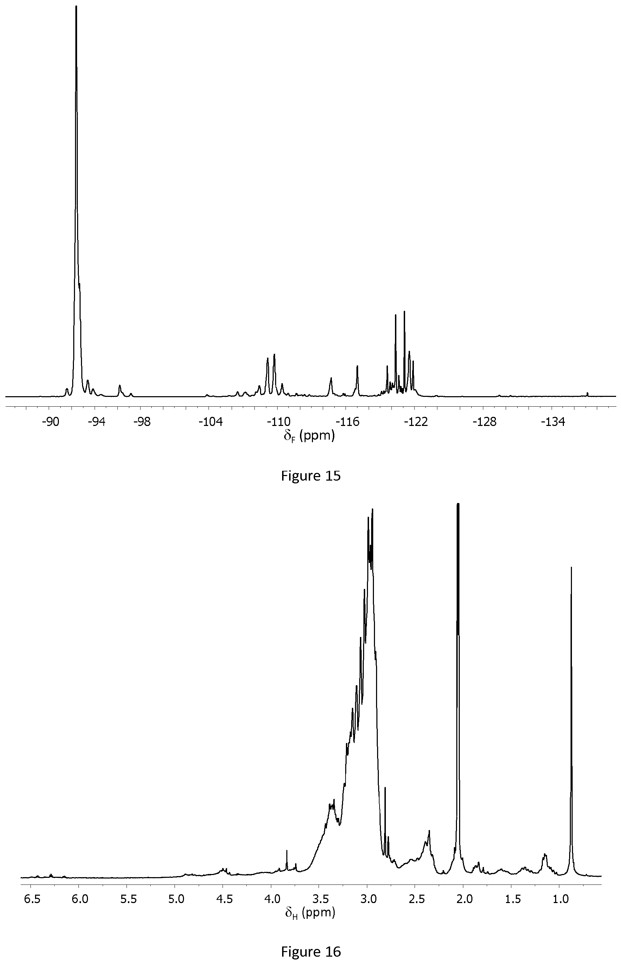

Le copolymère obtenu (rendement = 74 %) est caractérisé par spectroscopie RMN ¹⁹F (Figure 15) et ¹H (Figure 16) . Sur le spectre RMN ¹⁹F, on observe de très faibles signaux caractéristiques d'enchainements CTFE-CTFE (-130 ppm) mais pas de signaux caractéristiques d'une longue séquence CTFE-EV CTFE alternée (massifs larges et complexes entre -110 ppm et -126 ppm). L'absence de ces signaux confirme l'introduction le long de la chaine d'une seule triade CTFE-EV-CTFE. En RMN ¹H, le massif à 3,4 ppm correspond aux protons du motif GcEV et confirme ainsi sa présence le long de la chaîne polymère. La composition molaire VDF/CTFE/GcEV du terpolymère, obtenue en combinant les spectres RMN ¹H et ¹⁹F, est de 73/23/4.

Ce copolymère peut être réticulé de manière classique pour l'homme de l'art, en le faisant réagir avec des composés polyfonctionnels tels que des diamines, des diols ou des diacides carboxyliques.

## Revendications

1. Copolymère fluoré de formule (I) suivante :
poly[Aₐ-*co*-(X-E-X)_{b}] (I)
dans laquelle A est un monomère fluoré, X est un monomère fluoré ayant une double liaison qui possède un caractère électro-accepteur ; X est apte à copolymériser avec, d'une part, ledit monomère A et, d'autre part, avec un monomère E de manière alternée, E étant un monomère porteur d'un groupement fonctionnel ou fonctionnalisable ayant une double liaison qui possède un caractère électro-donneur ; a et b sont les rapports molaires du monomère A et de la triade X-E-X, respectivement, a étant supérieur à 0,85, de préférence supérieur à 0,90, avantageusement supérieur à 0,95 et b étant inférieur à 0,15, de préférence inférieur à 0,10, avantageusement inférieur à 0,05, et supérieur à 0; le rapport molaire X:E est supérieur ou égal à 2, de préférence égal à 2.

2. Copolymère fluoré selon la revendication 1 de formule poly[Aₐ-*co*-X-*co*-(X-E-X)_{b}], dans lequel le rapport molaire X:E est supérieur à 2.

3. Copolymère selon les revendications 1 et 2 dans lequel ledit monomère fluoré X ayant une double liaison qui possède un caractère électro-accepteur est choisi parmi : le chlorofluoroéthylène (CFE), le chlorotrifluoroéthylène (CTFE), l'hexafluoropropène (HFP), le fluorure de vinyle (VF), le tétrafluoroéthylène (TFE), les tétrafluoropropènes, les hexafluorobutènes, le perfluorobutadiène, le perfluorobutène, les perfluoroéthers vinyliques tels que le perfluoro(méthyl vinyl)éther (PMVE), le perfluoro(propyl vinyl) éther (PPVE), le pentafluoropropène (PFP), le fluorure de perfluoro(4-méthyl-3,6-dioxaoct-7-ène) sulfonyle (PFSVE) ou le 2-(trifluorométhyl) acide acrylique et ses dérivés esters.

4. Copolymère selon l'une des revendications 1 ou 2 dans lequel ledit monomère fluoré A est le fluorure de vinylidène (VDF), le trifluoroéthylène (TrFE) ou les mélanges de ceux-ci.

5. Copolymère selon l'une des revendications 1 à 4 dans lequel le monomère E ayant une double liaison qui possède un caractère électro-donneur est un éther d'alkyle et de vinyle, de formule CH₂=CH-O-R dans laquelle R est choisi parmi les groupements : alkyles tels que éthyle, butyle, *iso*-butyle, 2-ethylhexyle, *tert*-butyle ; alcools tels que le 4-hydroxybutyle, le 2-hydroxyéthyle ; glycérol, saccharide (hexoses et pentoses) ; halogénés tels que le 2-chloroéthyle, le chloro-(2,2-diméthylpropyl) ; thiols, silanes, acides, azides, alcynes époxy, carbonates, amines, ammoniums, amidine, aldéhyde, isocyanate, urée, carboxylates, sulfonates, phosphonates, silicones, polymères et oligomères fluorés ou hydrocarbonés.

6. Copolymère selon la revendication 1 ou 2, dans lequel le monomère A est le VDF, le TrFE ou un mélange de ceux-ci, le monomère X est le CTFE et le monomère E est un éther d'alkyle et de vinyle, de formule CH₂=CH-O-R dans laquelle R est choisi parmi les groupements : alkyles tels que éthyle, butyle, *iso*-butyle, 2-ethylhexyle, *tert*-butyle ; alcools tels que le 4-hydroxybutyle, le 2-hydroxyéthyle ; glycérol, saccharide (hexoses et pentoses) ; halogénés tels que le 2-chloroéthyle, le chloro-(2,2-diméthylpropyl) ; thiols, silanes, acides, azides, alcynes époxy, carbonates, amines, ammoniums, amidine, aldéhyde, isocyanate, urée, carboxylates, sulfonates, phosphonates, silicones, polymères et oligomères fluorés ou hydrocarbonés.

7. Copolymère selon la revendication 6, comprenant :
- une proportion de motifs issus du monomère A supérieure à 85 %, de préférence supérieure à 90 %, avantageusement supérieure à 95%;
- une proportion de motifs issus de la triade chlorotrifluoroéthylene-éther vinylique-chlorotrifluoroéthylène inférieure à 15%, de préférence inférieure à 10 %, avantageusement inférieure à 5 %;
- une proportion de motifs issus du monomère éther vinylique inférieure à 5%, de préférence inférieure à 2%, avantageusement inférieure à 1 %, et supérieure ou égale à 0,1% ;
- un rapport molaire X:E, chlorotrifluoroéthylène:éther vinylique, supérieur ou égal à 2, de préférence égal à 2.

8. Procédé de préparation du copolymère de formule (I) selon l'une des revendications 1 à 7 comprenant une étape de copolymérisation radicalaire d'un mélange réactionnel comprenant le monomère fluoré A, le monomère E et le monomère X ; le rapport molaire X:E étant supérieur ou égal à 2, étant de préférence égal à 2 ; le rapport molaire du monomère A étant supérieur à 0,85, de préférence supérieure à 0,90, avantageusement supérieur à 0,95 ; le rapport molaire de la triade X-EX étant inférieur à 0,15, de préférence inférieur à 0,10, avantageusement inférieur à 0,05.

9. Procédé selon la revendication 8, de préparation d'un copolymère de formule (I) dans lequel le monomère A est le VDF, le TrFE ou un mélange de ceux-ci, le monomère X est le CTFE et le monomère E est un éther d'alkyle et de vinyle (EV), de formule CH₂=CH-O-R dans laquelle R est choisi parmi les groupements : alkyles tels que éthyle, butyle, *iso*-butyle, 2-ethylhexyle, *tert*-butyle ; alcools tels que le 4-hydroxybutyle, le 2-hydroxyéthyle ; glycérol, saccharide (hexoses et pentoses) ; halogénés tels que le 2-chloroéthyle, le chloro-(2,2-diméthylpropyl) ; thiols, silanes, acides, azides, alcynes époxy, carbonates, amines, ammoniums, amidine, aldéhyde, isocyanate, urée, carboxylates, sulfonates, phosphonates, silicones, polymères et oligomères fluorés ou hydrocarbonés.

10. Procédé selon la revendication 9, dans lequel :
- la proportion molaire de VDF, de TrFE ou un mélange de ceux-ci, dans le mélange réactionnel est supérieure à 85 %, de préférence supérieure à 90 %, avantageusement supérieure à 95 % ;
- la proportion molaire d'EV dans le mélange réactionnel est inférieure à 5 %, de préférence inférieure à 2 %, avantageusement inférieure à 1 %, et supérieure ou égale à 0,1 % ;
- le rapport molaire X:E, chlorotrifluoroéthylène:éther vinylique est supérieur ou égal à 2, de préférence égal à 2 ;
les proportions molaires étant rapportées à la somme de moles de VDF, de TrFE, de CTFE et d'EV.

11. Procédé selon l'une des revendications 8 à 10, dans lequel ledit copolymère est obtenu par une polymérisation radicalaire en solution, comprenant une étape de copolymérisation dudit mélange réactionnel en présence d'un amorceur radicalaire et d'un solvant.

12. Procédé selon la revendication 11, dans lequel ledit solvant est choisi parmi le 1,1,1,3,3-pentafluorobutane, l'acétonitrile, la méthyléthylcétone, le diméthyl carbonate, le 2,2,2-trifluoroéthanol, le *tert*-butanol, l'hexafluoroisopropanol, l'acétate de méthyle, l'acétate d'éthyle, la cyclohexanone, l'eau et les mélanges de ceux-ci.

13. Procédé selon l'une des revendications 8 à 10 dans lequel ledit copolymère est obtenu par une polymérisation radicalaire en suspension, comprenant une étape de copolymérisation dudit mélange réactionnel en présence d'eau, d'un amorceur, éventuellement d'un agent de dispersion et, éventuellement, d'un agent de transfert de chaîne.

14. Procédé selon l'une des revendications 8 à 10 dans lequel ledit copolymère est obtenu par une polymérisation radicalaire en émulsion comprenant une étape de polymérisation dudit mélange réactionnel en présence d'eau, d'un tensioactif et d'une dispersion aqueuse d'amorceur.

15. Procédé selon l'une des revendications 8 à 14 comprenant une étape supplémentaire de fonctionnalisation dudit monomère EV.

16. Revêtements comprenant au moins un copolymère selon l'une des revendications 1 à 7.

17. Membranes comprenant au moins un copolymère selon l'une des revendications 1 à 7.

18. Dispositifs électroactifs comprenant au moins un copolymère selon l'une des revendications 1 à 7.

## Patentansprüche

1. Fluoriertes Copolymer der folgenden Formel (I):
Poly[Aₐ-*co*-(X-E-X)_{b}] (I)
wobei A ein fluoriertes Monomer ist, X ein fluoriertes Monomer mit einer Doppelbindung ist, die eine elektronenanziehende Eigenschaft aufweist; X einerseits mit dem Monomer A und andererseits mit einem Monomer E alternierend copolymerisierbar ist, wobei E ein Monomer ist, das eine funktionelle oder funktionalisierbare Gruppe mit einer Doppelbindung enthält, die eine elektronenabgebende Eigenschaft aufweist; a bzw. b die Stoffmengenanteile des Monomers A bzw. der Triade X-E-X sind, a größer als 0,85, vorzugsweise größer als 0,90, vorteilhafterweise größer als 0,95 ist und b kleiner als 0,15, vorzugsweise kleiner als 0,10, vorteilhafterweise kleiner als 0,05 und größer als 0 ist; wobei das Stoffmengenverhältnis X:E größer oder gleich 2, vorzugsweise gleich 2 ist.

2. Fluoriertes Copolymer nach Anspruch 1 der Formel Poly[Aₐ-*co*-X-*co*-(X-E-X)_{b}], wobei das Stoffmengenverhältnis X:E größer als 2 ist.

3. Copolymer nach den Ansprüchen 1 und 2, wobei das fluorierte Monomer X eine Doppelbindung enthält, die eine elektronenanziehende Eigenschaft aufweist und ausgewählt ist aus: Chlorfluorethylen (CFE), Chlortrifluorethylen (CTFE), Hexafluorpropen (HFP), Vinylfluorid (VF), Tetrafluorethylen (TFE), Tetrafluorpropenen, Hexafluorbutenen, Perfluorbutadien, Perfluorbuten, Perfluorvinylethern wie Perfluor(methylvinyl)ether (PMVE), Perfluor(propylvinyl)ether (PPVE), Pentafluorpropen (PFP), Perfluor(4-methyl-3,6-dioxaoct-7-en)sulfonylfluorid (PFSVE) oder 2-(Trifluormethyl)acrylsäure und deren Esterderivaten.

4. Copolymer nach einem der Ansprüche 1 oder 2, wobei das fluorierte Monomer A Vinylidenfluorid (VDF), Trifluorethylen (TrFE) oder eine Mischung davon ist.

5. Copolymer nach einem der Ansprüche 1 bis 4, wobei das Monomer E eine Doppelbindung aufweist, die eine elektronenabgebende Eigenschaft besitzt und ein Alkyl- und Vinylether der Formel CH₂=CH-O-R ist, wobei R ausgewählt ist aus den Gruppen: Alkylen wie Ethyl, Butyl, iso-Butyl, 2-Ethylhexyl, *tert*-Butyl; Alkoholen wie 4-Hydroxybutyl, 2-Hydroxyethyl; Glycerin, Saccharid (Hexosen und Pentosen); halogenierten Gruppen wie 2-Chlorethyl, Chlor-(2,2-dimethylpropyl); Thiolen, Silanen, Säuren, Aziden, Epoxyalkinen, Carbonaten, Aminen, Ammonium, Amidin, Aldehyd, Isocyanat, Harnstoff, Carboxylaten, Sulfonaten, Phosphonaten, Silikonen, fluorierten oder Kohlenwasserstoff-Polymeren und -Oligomeren.

6. Copolymer nach Anspruch 1 oder 2, wobei das Monomer A VDF, TrFE oder eine Mischung davon ist, das Monomer X CTFE ist und das Monomer E ein Alkyl- und Vinylether der Formel CH₂=CH-O-R ist, wobei R ausgewählt ist aus den Gruppen: Alkylen wie Ethyl, Butyl, iso-Butyl, 2-Ethylhexyl, tert-Butyl; Alkoholen wie 4-Hydroxybutyl, 2-Hydroxyethyl; Glycerin, Saccharid (Hexosen und Pentosen); halogenierten Gruppen wie 2-Chlorethyl, Chlor-(2,2-dimethylpropyl); Thiolen, Silanen, Säuren, Aziden, Epoxyalkinen, Carbonaten, Aminen, Ammonium, Amidin, Aldehyd, Isocyanat, Harnstoff, Carboxylaten, Sulfonaten, Phosphonaten, Silikonen, fluorierten oder Kohlenwasserstoff-Polymeren und -Oligomeren.

7. Copolymer nach Anspruch 6, mit:
- einem Anteil an vom Monomer A stammenden Einheiten von mehr als 85 %, vorzugsweise mehr als 90 %, vorteilhafterweise mehr als 95 %;
- einem Anteil an von der Triade Chlortrifluorethylen - Vinylether - Chlortrifluorethylen stammenden Einheiten von weniger als 15%, vorzugsweise weniger als 1 %, vorteilhafterweise weniger als 5 %;
- einem Anteil an vom Vinylether-Monomer stammenden Einheiten von weniger als 5%, vorzugsweise weniger als 2%, vorteilhafterweise weniger als 1 % und größer oder gleich 0,1%;
- einem Stoffmengenverhältnis X:E, Chlortrifluorethylen:Vinylether, von größer oder gleich 2, vorzugsweise gleich 2.

8. Verfahren zur Herstellung des Copolymers der Formel (1) nach einem der Ansprüche 1 bis 7, bestehend aus einem Schritt der radikalischen Copolymerisation einer Reaktionsmischung, die das fluorierte Monomer A, das Monomer E und das Monomer X umfasst; wobei das Stoffmengenverhältnis X:E größer oder gleich 2, vorzugsweise gleich 2 ist; der Stoffmengenanteil des Monomers A größer als 0,85, vorzugsweise größer als 0,90, vorteilhafterweise größer als 0,95 ist; der Stoffmengenanteil der Triade X-E-X kleiner als 0,15, vorzugsweise kleiner als 0,10, vorteilhafterweise kleiner als 0,05 ist.

9. Verfahren nach Anspruch 8 zur Herstellung eines Copolymers der Formel (1), wobei das Monomer A VDF, TrFE oder eine Mischung davon ist, das Monomer X CTFE ist und das Monomer E ein Alkyl- und Vinylether (VE) der Formel CH₂=CH-O-R ist, wobei R ausgewählt ist aus den Gruppen: Alkylen wie Ethyl, Butyl, iso-Butyl, 2-Ethylhexyl, tert-Butyl; Alkoholen wie 4-Hydroxybutyl, 2-Hydroxyethyl; Glycerin, Saccharid (Hexosen und Pentosen); halogenierten Gruppen wie 2-Chlorethyl, Chlor-(2,2-dimethylpropyl); Thiolen, Silanen, Säuren, Aziden, Epoxyalkinen, Carbonaten, Aminen, Ammonium, Amidin, Aldehyd, Isocyanat, Harnstoff, Carboxylaten, Sulfonaten, Phosphonaten, Silikonen, fluorierten oder Kohlenwasserstoff-Polymeren und -Oligomeren.

10. Verfahren nach Anspruch 9, wobei
- der Stoffmengenanteil von VDF, TrFE oder einer Mischung davon in der Reaktionsmischung mehr als 85 %, vorzugsweise mehr als 90 %, vorteilhafterweise mehr als 95 % beträgt;
- der Stoffmengenanteil von VE in der Reaktionsmischung weniger als 5 %, vorzugsweise weniger als 2 %, vorteilhafterweise weniger als 1 % und größer oder gleich 0,1 % ist;
- das Stoffmengenverhältnis X:E, Chlortrifluorethylen:Vinylether, größer oder gleich 2, vorzugsweise gleich 2 ist;
wobei die Stoffmengenanteile bzw. -verhältnisse als Summe der Mole VDF, TrFE, CTFE und VE angegeben sind.

11. Verfahren nach einem der Ansprüche 8 bis 10, wobei das Copolymer durch eine radikalische Polymerisation in Lösung erhalten wird, das einen Schritt der Copolymerisation der Reaktionsmischung in Gegenwart eines Radikalinitiators und eines Lösungsmittels umfasst.

12. Verfahren nach Anspruch 11, wobei das Lösungsmittel aus 1,1,1,3,3-Pentafluorbutan, Acetonitril, Methylethylketon, Dimethylcarbonat, 2,2,2-Trifluorethanol, *tert*-Butanol, Hexafluorisopropanol, Methylacetat, Ethylacetat, Cyclohexanon, Wasser und Mischungen davon ausgewählt ist.

13. Verfahren nach einem der Ansprüche 8 bis 10, wobei das Copolymer durch eine radikalische Polymerisation in Suspension erhalten wird, das einen Schritt der Copolymerisation der Reaktionsmischung in Gegenwart von Wasser, eines Initiators, gegebenenfalls eines Dispergiermittels und gegebenenfalls eines Kettenübertragungsmittels umfasst.

14. Verfahren nach einem der Ansprüche 8 bis 10, wobei das Copolymer durch eine radikalische Polymerisation in Emulsion erhalten wird, das einen Schritt der Polymerisation der Reaktionsmischung in Gegenwart von Wasser, eines Tensids und einer wässrigen Initiatordispersion umfasst.

15. Verfahren nach einem der Ansprüche 8 bis 14, bestehend aus einem zusätzlichen Schritt der Funktionalisierung des VE-Monomers.

16. Beschichtungen, bestehend aus mindestens einem Copolymer nach einem der Ansprüche 1 bis 7.

17. Membranen, bestehend aus mindestens einem Copolymer nach einem der Ansprüche 1 bis 7.

18. Elektroaktive Vorrichtungen, bestehend aus mindestens einem Copolymer nach einem der Ansprüche 1 bis 7.

## Claims

1. A fluorinated copolymer of formula (I) below:
poly[Aₐ-*co*-(X-E-X)_{b}] (I)
wherein A is a fluorinated monomer, X is a fluorinated monomer having a double bond which has an electron acceptor nature; X is capable of copolymerising with, on the one hand, said monomer A and, on the other hand, with a monomer E in an alternating manner, E being a monomer bearing a functional or functionalisable group having a double bond which has an electron donor nature; a and b are the molar ratios of the monomer A and of the triad X-E-X, respectively, a being greater than 0.85, preferably greater than 0.90, advantageously greater than 0.95 and b being less than 0.15, preferably less than 0.10, advantageously less than 0.05, and greater than 0; the X:E molar ratio is greater than or equal to 2, preferably equal to 2.

2. The fluorinated copolymer as claimed in claim1, of formula poly[Aₐ-*co*-X-*co*-(X-E-X)_{b}], wherein the X:E molar ratio is greater than 2.

3. The copolymer as claimed in claims 1 and 2, wherein said fluorinated monomer X having a double bond which has an electron acceptor nature is chosen from: chlorofluoroethylene (CFE), chlorotrifluoroethylene (CTFE), hexafluoropropene (HFP), vinyl fluoride (VF), tetrafluoroethylene (TFE), tetrafluoropropenes, hexafluorobutenes, perfluorobutadiene, perfluorobutene, perfluorovinyl ethers, such as perfluoro(methyl vinyl) ether (PMVE), perfluoro(propyl vinyl) ether (PPVE), pentafluoropropene (PFP), perfluoro(4-methyl-3,6-dioxaoct-7-ene) sulfonyl fluoride (PFSVE) or 2-(trifluoromethyl)acrylic acid and the ester derivatives thereof.

4. The copolymer as claimed in each of claims 1 and 2, wherein said fluorinated monomer A is vinylidene fluoride (VDF), trifluoroethylene (TrFE) or mixtures thereof.

5. The copolymer as claimed in one of claims 1 to 4, wherein the monomer E having a double bond which has an electron donor nature is an alkyl vinyl ether CH₂=CH-O-R in which R is chosen from the following groups: alkyls, such as ethyl, butyl, iso-butyl, 2-ethylhexyl or *tert*-butyl; alcohols, such as 4-hydroxybutyl or 2-hydroxyethyl; glycerol, saccharide (hexoses and pentoses); halogenated groups, such as 2-chloroethyl or chloro-(2,2-dimethylpropyl); thiols, silanes, acids, azides, alkynes, epoxy, carbonates, amines, ammoniums, amidine, aldehyde, isocyanate, urea, carboxylates, sulfonates, phosphonates, silicones, fluorinated or hydrocarbon-based polymers and oligomers.

6. The copolymer as claimed in claim 1 or 2, wherein the monomer A is VDF, TrFE or a mixture thereof, the monomer X is CTFE and the monomer E is an alkyl vinyl ether CH₂=CH-O-R in which R is chosen from the following groups: alkyls, such as ethyl, butyl, iso-butyl, 2-ethylhexyl or tert-butyl; alcohols, such as 4-hydroxybutyl or 2-hydroxyethyl; glycerol, saccharide (hexoses and pentoses); halogenated groups, such as 2-chloroethyl or chloro-(2,2-dimethylpropyl); thiols, silanes, acids, azides, alkynes, epoxy, carbonates, amines, ammoniums, amidine, aldehyde, isocyanate, urea, carboxylates, sulfonates, phosphonates, silicones, fluorinated or hydrocarbon-based polymers and oligomers.

7. The copolymer as claimed in claim 6, comprising:
- a proportion of moieties derived from the monomer A of greater than 85%, preferably greater than 90%, advantageously greater than 95%;
- a proportion of moieties derived from the chlorotrifluoroethylene-vinyl ether-chlorotrifluoroethylene triad of less than 15%, preferably less than 1%, advantageously less than 5%;
- a proportion of moieties derived from the vinyl ether monomer of less than 5%, preferably less than 2%, advantageously less than 1%, and greater than or equal to 0.1%;
- an X:E, chlorotrifluoroethylene: vinyl ether, molar ratio of greater than or equal to 2, preferably equal to 2.

8. A process for producing the copolymer of formula (I) as claimed in one of claims 1 to 7, comprising a step of radical copolymerisation of a reaction mixture comprising the fluorinated monomer A, the monomer E and the monomer X; the X:E molar ratio being greater than or equal to 2, preferably being equal to 2; the molar ratio of the monomer A being greater than 0.85, preferably greater than 0.90, advantageously greater than 0.95; the molar ratio of the triad X-E-X being less than 0.15, preferably less than 0.10, advantageously less than 0.05.

9. The process as claimed in claim 8, for producing a copolymer of formula (I), wherein the monomeric A is VDF, TrFE or a mixture thereof, the monomer X is CTFE and the monomer E is an alkyl vinyl ether (VE) of formula CH₂=CH-O-R in which R is chosen from the following groups: alkyls, such as ethyl, butyl, iso-butyl, 2-ethylhexyl or tert-butyl; alcohols, such as 4-hydroxybutyl or 2-hydroxyethyl; glycerol, saccharide (hexoses and pentoses); halogenated groups, such as 2-chloroethyl or chloro-(2,2-dimethylpropyl); thiols, silanes, acids, azides, alkynes, epoxy, carbonates, amines, ammoniums, amidine, aldehyde, isocyanate, urea, carboxylates, sulfonates, phosphonates, silicones, fluorinated or hydrocarbon-based polymers and oligomers.

10. The process as claimed in claim 9, wherein:
- the molar proportion of VDF, of TrFE or a mixture thereof, in the reaction mixture, is greater than 85%, preferably greater than 90, advantageously greater than 95%;
- the molar proportion of VE, in the reaction mixture, is less than 5%, preferably less than 2%, advantageously less than 1%, and greater than or equal to 0.1%;
- the X:E, chlorotrifluoroethylene:vinyl ether, molar proportion is greater than or equal to 2, preferably equal to 2;
the molar proportions being related to the sum of moles of VDF, of TrFE, of CTFE and of VE.

11. The process as claimed in one of claims 8 to 10, wherein said copolymer is obtained by radical solution polymerisation comprising a step of copolymerisation of said reaction mixture in the presence of a radical initiator and of a solvent.

12. The process as claimed in claim 11, wherein said solvent is chosen from 1,1,1,3,3-pentafluorobutane, acetonitrile, methyl ethyl ketone, dimethyl carbonate, 2,2,2-trifluoroethanol, *tert-butanol,* 1 'hexafluoroisopropanol, methyl acetate, ethyl acetate, cyclohexanone, water and mixtures thereof.

13. The process as claimed in one of claims 8 to 10, wherein said copolymer is obtained by radical suspension polymerisation comprising a step of copolymerisation of said reaction mixture in the presence of water, of an initiator, optionally of a dispersing agent, and optionally of a chain transfer agent.

14. The process as claimed in one of claims 8 to 10, wherein said copolymer is obtained by radical emulsion polymerisation comprising a step of copolymerisation of said reaction mixture in the presence of of water, of a surfactant and of an aqueous dispersion of initiator.

15. The process as claimed in one of claims 8 to 14, comprising an additional step of functionalisation of said VE monomer.

16. Coatings comprising at least one copolymer as claimed in one of claims 1 to 7.

17. Membranes comprising at least one copolymer as claimed in one of claims 1 to 7.

18. Electroactive devices comprising at least one copolymer as claimed in one of claims 1 to 7.
